(19) Europäisches Patentamt
European Patent Office
Office européen des brevets

(11) **EP 3 097 397 B1**

(12) **EUROPÄISCHE PATENTSCHRIFT**

(45) Veröffentlichungstag und Bekanntmachung des Hinweises auf die Patenterteilung:
**13.03.2019   Patentblatt 2019/11**

(21) Anmeldenummer: **15702154.4**

(22) Anmeldetag: **16.01.2015**

(51) Int Cl.:
*G01M 11/08* (2006.01)          *G01L 1/24* (2006.01)
*B61K 9/08* (2006.01)          *G01B 11/16* (2006.01)
*B61L 23/04* (2006.01)

(86) Internationale Anmeldenummer:
**PCT/EP2015/050797**

(87) Internationale Veröffentlichungsnummer:
**WO 2015/110361 (30.07.2015 Gazette 2015/30)**

(54) **SCHIENENMESSSYSTEM**

SCHIENENMESSSYSTEM

SYSTÈME DE MESURE DE RAIL

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**
Benannte Erstreckungsstaaten:
**BA**

(30) Priorität: **21.01.2014   DE 102014100653**

(43) Veröffentlichungstag der Anmeldung:
**30.11.2016   Patentblatt 2016/48**

(60) Teilanmeldung:
**18163775.2 / 3 376 196**

(73) Patentinhaber: **Thales Management & Services Deutschland GmbH**
**71254 Ditzingen (DE)**

(72) Erfinder:
• GLÜCK, Martin
70199 Stuttgart (DE)
• MÜLLER, Mathias
81541 München (DE)

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
CN-A- 101 797 928          DE-T2- 69 521 971
US-A1- 2003 141 440          US-A1- 2007 031 084

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

TECHNISCHES GEBIET

Die vorliegende Anmeldung betrifft allgemein eine optische Messvorrichtung zur Erfassung von Messgrößen mittels in optischen Fasern eingebetteter Sensoren, und betrifft insbesondere eine Verwendung von mindestens einem faseroptischen Sensorelement zum Messen einer mechanischen Größe, die auf eine Schiene einwirkt, und ein Schienenmesssystem. Ferner betrifft die vorliegende Anmeldung ein Verfahren zum Anbringen eines faseroptischen Sensorelements an eine Schiene.

TECHNISCHER HINTERGRUND

In Messsystemen gewinnen faseroptische Sensoren zunehmend an Bedeutung. Hierbei werden ein oder mehrere in Lichtwellenleiter eingebettete Sensoren, wie beispielsweise Faser-Bragg-Gitter, herangezogen, um eine durch eine mechanische Größe hervorgerufene Dehnung der optischen Faser zu erfassen, und um damit die Kräfte, Drehmomente, Beschleunigungen, Belastungen, Druckzustände etc. detektieren zu können.

Die in Fasersensoren integrierten Sensorelemente werden mit optischer Strahlung in einem geeigneten Wellenlängenbereich bestrahlt. Durch die einwirkende Kraft wird der Lichtwellenleiter gedehnt, und eine Reflexions- bzw. Transmissionswellenlänge des Faser-Bragg-Gitters ändert sich. Ein Teil des eingestrahlten Lichts wird vom Sensor zurückgeworfen und einer Auswerte- und Analyseeinheit zugeführt. Die Wellenlängenänderung, die auf der einwirkenden Kraft beruht, kann in der Analyseeinheit untersucht und zur Detektion von mechanischen Einflüssen auf das Sensorelement herangezogen werden.

Die Intensität und/oder der Wellenlängenbereich der am Sensorelement reflektierten optischen Strahlung bzw. der durch das Sensorelement transmittierten optischen Strahlung weisen Merkmale auf, die durch die aufgebrachte mechanische Größe beeinflusst werden. Die in die optische Sensorfaser integrierten faseroptischen Sensorelemente sind u.a. empfindlich auf Dehnungen der Sensorfaser, wodurch das von dem von dem Sensorelement reflektierte oder das durch das Sensorelement transmittierte Wellenlängenspektrum beeinflusst wird.

Verschiedene Messsysteme werden verwendet, um verschiedene Aspekte eines Schienen- oder Gleissystems zu überwachen. Insbesondere ist die vom einen vorbeifahrenden Zug einwirkende Kraft auf die Schiene von Interesse, die nicht zuletzt Rückschlüsse auf den vorbeifahrenden Zug zulässt.

Ferner ist es bei Messsystemen für Schienen- oder Gleissysteme, auf denen Züge fahren, eine Herausforderung stark variierende Achslasten sicher zu erkennen, insbesondere da Sicherheitsanforderungen eine sehr geringe Fehlerquote erfordern. Darüber hinaus variieren nicht nur die Achslasten, die auf ein Schienensystem oder Gleissystem eingebracht werden. Auch die Lagerung der Schienen auf Schwellen, die Struktur des Gleisbettes sowie die Art der Züge kann stark variieren. Dies bedingt große Herausforderungen für ein Messsystem.

Ferner hängen Dehnungen der optischen Faser und damit des optischen Sensorelements in der Faser und/oder Veränderungen der Faser-Bragg-Gitter-Struktur nicht nur von der zu messenden mechanischen Größe, wie beispielsweise der Kraft, ab, sondern können auch durch unerwünschte Störgrößen, wie beispielsweise Temperaturschwankungen, beeinflusst werden. Es ist somit wünschenswert, Störgrößen, die sich auf die Messgenauigkeit bei der Erfassung der Sollgrößen auswirken, zu eliminieren oder zumindest zu unterdrücken.

Es ist daher erstrebenswert ein verbessertes Messsystem für Schienen-oder Gleissysteme, eine verbesserte faseroptische Sensoreinheit für Schienen- oder Gleissysteme, sowie eine verbesserte Verwendung der faseroptischen Sensoreinheit zur Verfügung zu stellen.

In CN 101 797 928 A wird ein Achszählsystem an einer Schiene offenbart, welches eine breitbandige Lichtquelle, einen optischen Zirkulator, ein dehnbares Faser-Bragg-Gitter, welches an der Schiene angeordnet ist, und einen Fotodetektor sowie ein Detektor zum Auswerten des Lichtsignals/Zählen der Achsen aufweist.

DE 695 21 971 T1 offenbart ein optisches Mikrosystem mit dielektrischen Leitern zum Messen longitudinaler Spannungen in Form einer Rosette. Innerhalb einer Rosette sind mehrere optische Fasern in unterschiedlichen Winkeln zueinander angeordnet, was es ermöglicht, eine Längsspannung unabhängig von der Temperatur zu messen.

ZUSAMMENFASSUNG DER ERFINDUNG

Die vorliegende Anmeldung stellt eine Verwendung von mindestens einem faseroptischen Sensorelement zum Messen einer mechanischen Größe, die auf eine Schiene einwirkt, ein Schienenmesssystem und ein Verfahren zum Anbringen eines faseroptischen Sensorelements an eine Schiene gemäß den unabhängigen Ansprüchen bereit.

Gemäß einer Ausführungsform ist eine Verwendung mindestens einer faseroptischen Sensoreinheit zum Messen einer mechanischen Größe, die auf eine Schiene mit einer Längserstreckung und einer sich entlang der Längserstreckung erstreckenden neutralen Faser einwirkt, zur Verfügung gestellt, wobei die Verwendung ein Befestigen der mindestens einen faseroptischen Sensoreinheit unter einem Winkel von 30° bis 60°, insbesondere 45°, relativ zur neutralen Faser oder unter einem Winkel von -30° bis -60°, insbesondere -45°, relativ zur neutralen Faser an der Schiene, ein Bestrahlen der mindestens einen faseroptischen Sensoreinheit mit Primärlicht zur Erzeugung eines Signallichts in Reflexion oder Transmission, ein Erfassen der Intensität des Signallichts, und ein Auswerten des Signallichts umfasst. Erfindungsgemäß ist ein Befestigungspunkt der faseroptischen Sensoreinheit auf einer Seite der neutralen Faser und ein anderer Befestigungspunkt auf der gegenüberliegenden Seite der neutralen Faser angeordnet.

Die faseroptische Sensoreinheit zum Erfassen einer auf eine Schiene einwirkenden mechanischen Kraft weist vorzugsweise eine optische Faser, ein in der optischen Faser zur Verfügung gestelltes Faser-Bragg-Gitter, welches eine von der mechanischen Kraft abhängige Bragg-Wellenlänge auf, eine Wandlerstruktur, wobei die Wandlerstruktur einen Signalverstärkungshebel aufweist, und einen Kantenfilter zum Filtern des ersten Teils des Signallichts umfasst, insbesondere wobei der Kantenfilter eine Filterkennlinie mit einer Nenn-Steigung von 8 % pro nm bezogen auf die transmittierte Intensität oder weniger, insbesondere zwischen 2 % - 7 % pro nm, hat, insbesondere wobei ein Messbereich von auf die Schiene wirkenden Achslasten von 200 kg bis 50.000 kg zur Verfügung gestellt wird.

Gemäß einer weiteren Ausführungsform ist ein Schienenmesssystem zur Verfügung gestellt, wobei das Schienenmesssystem eine Schiene mit einer Längserstreckung und einer sich entlang der Längserstreckung ersteckenden neutralen Faser, auf die eine durch einen darüberfahrenden Zug erzeugte mechanische Kraft einwirkt, und mindestens eine faseroptische Sensoreinheit, typischerweise zwei faseroptische Sensoreinheiten, zum Erfassen der auf die Schiene einwirkenden mechanischen Kraft umfasst, wobei eine faseroptische Sensoreinheit ein Faser-Bragg-Gitter aufweist, welches eine von der mechanischen Größe abhängige Bragg-Wellenlänge aufweist, und wobei die mindestens eine faseroptische Sensoreinheit unter einem Winkel von 30° bis 60°, insbesondere 45°, relativ zur neutralen Faser oder unter einem Winkel von -30° bis -60°, insbesondere -45°, relativ zur neutralen Faser der Schiene an der Schiene angebracht ist. Erfindungsgemäß ist ein Befestigungspunkt der faseroptischen Sensoreinheit auf einer Seite der neutralen Faser und ein anderer Befestigungspunkt auf der gegenüberliegenden Seite der neutralen Faser angeordnet.

Gemäß einer weiteren Ausführungsform ist ein Verfahren zum Anbringen einer faseroptischen Sensoreinheit an eine Schiene, insbesondere einer faseroptischen Sensoreinheit mit einem Faser-Bragg-Gitter, an eine Schiene zur Verfügung gestellt, wobei das Verfahren ein Anbringen der faseroptischen Sensoreinheit unter einem weiteren Winkel von 30° bis 60°, insbesondere 45°, relativ zur neutralen Faser oder unter einem weiteren Winkel von -30° bis -60°, insbesondere -45°, relativ zur neutralen Faser der Schiene aufweist, insbesondere wobei die faseroptischen Sensoreinheit ungefähr an der neutralen Faser angebracht ist. Erfindungsgemäß ist ein Befestigungspunkt der faseroptischen Sensoreinheit auf einer Seite der neutralen Faser und ein anderer Befestigungspunkt auf der gegenüberliegenden Seite der neutralen Faser angeordnet.

Eine Verwendung mindestens einer faseroptischen Sensoreinheit zum Messen einer mechanischen Größe, die auf eine Schiene mit einer Längserstreckung und einer sich entlang der Längserstreckung ersteckenden neutralen Faser einwirkt, umfasst vorzugsweise ein Bereitstellen der mindestens einen faseroptischen Sensoreinheit an der neutralen Faser, insbesondere so dass die faseroptische Sensoreinheit die neutrale Faser kreuzt, ein Bestrahlen der mindestens einen faseroptischen Sensoreinheit mit Primärlicht zur Erzeugung eines Signallichts in Reflexion oder Transmission, ein Erfassen der Intensität des Signallichts, und ein Auswerten des Signallichts.

Gemäß einer weiteren Ausführungsform ist ein Schienenmesssystem zur Verfügung gestellt, wobei das Schienenmesssystem eine Schiene mit einer Längserstreckung und einer sich entlang der Längserstreckung ersteckenden neutralen Faser, auf die eine durch einen darüberfahrenden Zug erzeugte mechanische Kraft einwirkt, und mindestens eine faseroptische Sensoreinheit, typischerweise zwei faseroptische Sensoreinheiten, zum Erfassen der auf die Schiene einwirkenden mechanischen Kraft umfasst, wobei eine faseroptische Sensoreinheit ein Faser-Bragg-Gitter aufweist, welches eine von der mechanischen Größe abhängige Bragg-Wellenlänge aufweist, und wobei die mindestens eine faseroptische Sensoreinheit an der neutralen Faser angebracht ist, insbesondere die neutrale Faser kreuzend angebracht ist.

Gemäß einer weiteren Ausführungsform ist ein Verfahren zum Anbringen einer faseroptischen Sensoreinheit, insbesondere einer faseroptischen Sensoreinheit mit einem Faser-Bragg-Gitter, an eine Schiene zur Verfügung gestellt, wobei das Verfahren ein Anbringen der faseroptischen Sensoreinheit an der neutralen Faser der Schiene aufweist insbesondere so dass die faseroptische Sensoreinheit die neutrale Faser kreuzt.

Gemäß einer weiteren Ausführungsform ist ein Messverfahren zum Messen einer mechanischen Größe, die auf eine Schiene mit einer Längserstreckung und einer sich entlang der Längserstreckung ersteckenden neutralen Faser einwirkt, zur Verfügung gestellt, wobei das Verfahren ein Bestrahlen von mindestens einen faseroptischen Sensoreinheit mit Primärlicht zur Erzeugung eines Signallichts in Reflexion oder Transmission, ein Erfassen der Intensität des Signallichts, und ein Auswerten des Signallichts umfasst, wobei insbesondere beim Signallicht ein Clipping auftritt, dass zum Auswerten des Signallichts verwendet wird.

KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:

Figur 1 — eine Sensorfaser, welche ein als ein Faser-Bragg-Gitter ausgebildetes integriertes Sensorelement zur Messung einer Faserdehnung enthält;

Figur 2 — eine Sensorreflexionsantwort, die hervorgerufen ist durch ein in Fig. 1 dargestelltes integriertes Sensorelement innerhalb der Faser;

Figur 3 — ein schematisches Blockbild einer faseroptischen Messvorrichtung mit Lichtquelle, Faserkoppler und Detektionsanordnung bzw. eine faseroptische Sensoreinheit, bzw. ein Schienenmesssystem gemäß Ausführungsbeispielen der vorliegenden Erfindung;

Figur 4 — ein Schemabild eines Schienenmesssystems gemäß weiteren Ausführungsbeispielen; und

Figuren 5A und 5B — ein Schemabild einer in einem Sensorelement verwendeten Wandlerstruktur, die in einer Sensoreinheit bzw. einem Schienenmesssystem verwendet werden können.

In den Zeichnungen bezeichnen gleiche Bezugszeichen gleiche oder funktionsgleiche Komponenten oder Schritte.

DETAILLIERTE BESCHREIBUNG

Im Folgenden wird detaillierter Bezug genommen auf verschiedene Ausführungsformen der Erfindung, wobei ein oder mehrere Beispiele in den Zeichnungen veranschaulicht sind.

Ausführungsformen der vorliegenden Erfindung, die hierin beschrieben sind, betreffen u.a. eine Verwendung mindestens einer faseroptischen Sensoreinheit zum Messen einer mechanischen Größe, eine faseroptische Sensoreinheit zum Erfassen einer auf eine Schiene einwirkenden mechanischen Kraft, ein Schienenmesssystem und ein Verfahren zum Anbringen einer faseroptischen Sensoreinheit, insbesondere einer faseroptischen Sensoreinheit mit einem Faser-Bragg-Gitter an eine Schiene.

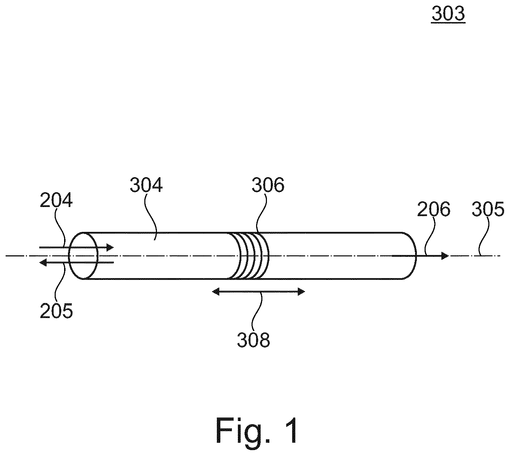

Fig. 1 veranschaulicht einen in einen Lichtwellenleiter integrierten Sensor bzw. eine Sensorelement 303, welche ein Faser-Bragg-Gitter 306 aufweist. Obwohl in Fig. 1 nur ein einziges Faser-Bragg-Gitter 306 gezeigt ist, ist zu verstehen, dass die vorliegende Erfindung nicht auf eine Datenerfassung aus einem einzelnen Faser-Bragg-Gitter 306 beschränkt ist, sondern dass längs einer Übertragungsfaser bzw. einer Sensorfaser 304 eine Vielzahl von Faser-Bragg-Gittern 306 angeordnet sein können.

Fig. 1 zeigt somit nur einen Abschnitt eines optischen Wellenleiters, welcher als Sensorfaser 304 ausgebildet ist, wobei diese Sensorfaser 304 empfindlich auf eine Faserdehnung 308 ist. Es sei hier darauf hingewiesen, dass der Ausdruck "optisch" bzw. "Licht" auf einen Wellenlängenbereich im elektromagnetischen Spektrum hinweisen soll, welcher sich vom ultravioletten Spektralbereich über den sichtbaren Spektralbereich bis hin zu dem infraroten Spektralbereich erstrecken kann. Eine Mittenwellenlänge des Faser-Bragg-Gitters 306, d.h. eine so genannte Bragg-Wellenlänge $\lambda_B$, wird durch die folgende Gleichung erhalten:

$$\lambda_B = 2 \cdot n_k \cdot \Lambda.$$

Hierbei ist $n_k$ die effektive Brechzahl des Grundmodus des Kerns der Sensorfaser 304 und $\Lambda$ die räumliche Gitterperiode (Modulationsperiode) des Faser-Bragg-Gitters 306.

Eine spektrale Breite, die durch eine Halbwertsbreite der Reflexionsantwort gegeben ist, hängt von der Ausdehnung des Faser-Bragg-Gitters 306 längs der Sensorfaser 304 ab. Die Lichtausbreitung innerhalb der Sensorfaser 304 ist somit durch die Wirkung des Faser-Bragg-Gitters 306 beispielsweise abhängig von Kräften, Momenten und mechanischen Spannungen sowie Temperaturen, mit der die Sensorfaser 304 und insbesondere das Faser-Bragg-Gitter 306 innerhalb der Sensorfaser 304 beaufschlagt werden.

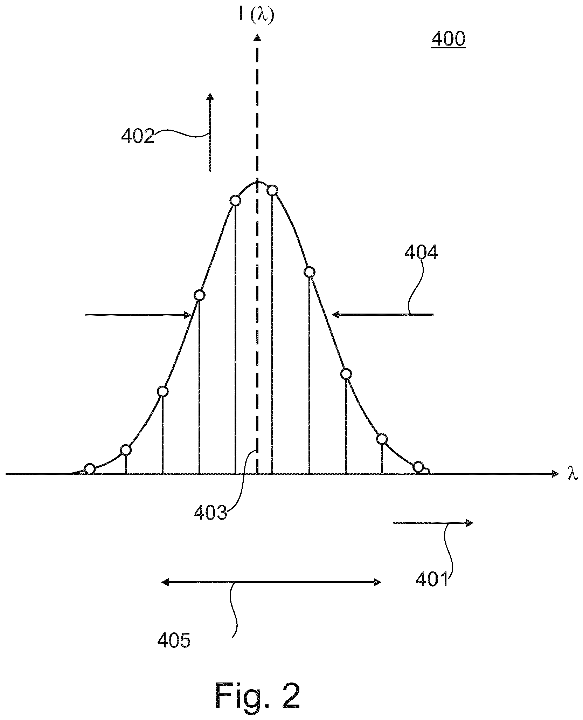

Wie in Fig. 1 gezeigt, tritt Messlicht 204 von links in die Sensorfaser 304 ein, wobei ein Teil des Messlichts 204 als ein transmittiertes Licht 206 mit einem im Vergleich zum Messlicht 204 veränderten Wellenlängenverlauf austritt. Ferner ist es möglich, reflektiertes Licht 205 am Eingangsende der Faser (d.h. an dem Ende, an welchem auch das Messlicht 204 eingestrahlt wird) zu empfangen, wobei das reflektierte Licht 204 ebenfalls eine modifizierte Wellenlängenverteilung, wie sie beispielsweise in Fig. 2 dargestellt ist (Sensorreflexionsantwort), aufweist.

In einem Fall, in dem das Messlicht 204 in einem breiten Spektralbereich eingestrahlt wird, ergibt sich in dem transmittierten Licht 206 an der Stelle der Bragg-Wellenlänge ein Transmissionsminimum (im Vergleich zu dem in Fig. 2 gezeigten Verlauf invertierter Verlauf, d.h. maximale Absorption bei der Bragg-Wellenlänge). In dem reflektierten Licht ergibt sich an dieser Stelle ein Reflexionsmaximum, welches unten stehend unter Bezugnahme auf Fig. 2 erläutert wird.

Fig. 2 stellt schematisch eine Sensorreflexionsantwort 400 dar, die empfangen wird, wenn breitbandiges Messlicht 204 eingestrahlt wird, und wenn die Mittenwellenlänge des Faser-Bragg-Gitters 306 (Fig. 1), d.h. die Bragg-Wellenlänge $\lambda_B$, der gestrichelten Linie 403 entspricht. Die Sensorreflexionsantwort 400 kann einen bezüglich der Mittenwellenlänge 403 symmetrischen Verlauf aufweisen, wobei der Verlauf eine Halbwertsbreite 404 (FWHM, Full Width at Half Maximum), d.h. eine spektrale Breite bei der Hälfte der Maximalintensität aufweist.

Schematisch sind in Fig. 2 hierbei räumliche Abtastpunkte (Kreise) gekennzeichnet. Durch die Auswertung des mit der Detektoreinheit 104 aufgenommenen modifizierten Sekundärlichts 203 ist es nunmehr möglich, den in Fig. 2 gezeigten Verlauf, d.h. die Sensorreflexionsantwort 400 als Funktion einer Wellenlänge $\lambda$ zu erhalten. In Fig. 2 ist somit eine Intensitätsverteilung $I(\lambda)$, d.h. die von dem Sensorelement 303 reflektierte Intensität als Funktion der Wellenlänge $\lambda$ dargestellt. Eine durch die Messvorrichtung zu erfassende Wellenlängenverteilung ergibt sich durch einen Wellenlängen-Ansprechbereich 405, der durch den Doppelpfeil in Fig. 2 dargestellt ist. Modifiziertes Sekundärlicht 203 weist in diesem Bereich Wellenlängenkomponenten auf, wenn das Faser-Bragg-Gitter 306 vermessen wird. Das modifizierte Sekundärlicht 203 entspricht dann der in Fig. 2 dargestellten Sensorreflexionsantwort 400, d.h., eine Reflexionsintensität 402 wird als Funktion der Wellenlänge 401 aufgenommen.

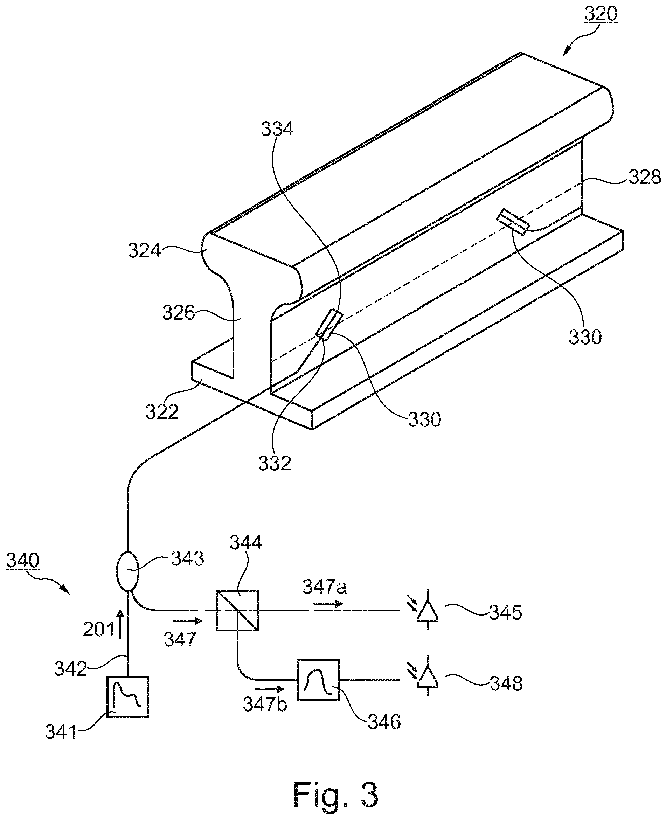

Die Figur 3 zeigt ein schematisches Blockbild einer faseroptischen Messvorrichtung mit Lichtquelle, Faserkoppler und Detektionsanordnung bzw. eine faseroptische Sensoreinheit, bzw. ein Schienenmesssystem gemäß Ausführungsbeispielen der vorliegenden Erfindung. In der Figur 3 sind eine Schiene 320, eine an der Schiene angebrachte faseroptische Sensoreinheit 330 und eine optische Messvorrichtung 340 gezeigt. Die faseroptische Sensoreinheit 330 kann dabei die in der Figur 2 gezeigt Sensoreinheit 303 sein, oder dieser ähnlich sein.

Die Schiene 320 kann näherungsweise als Balken betrachtet werden. Ein Balken ist allgemein ein stabförmiges Tragglied, das durch Lasten quer zu seiner Achse belastet werden kann. Die Reaktion des Balkens auf die Belastungen sind Biege- und Schubverformungen. Wirkt beispielsweise eine Kraft auf eine Angriffsfläche des Balkens sein, so verformt sich dieser im Rahmen der Biegeverformung derart, dass ein der Angriffsfläche zugewandter erster Bereich eine Kontraktion (negative Dehnung) erfährt und ein von der Angriffsfläche abgewandter zweiter Bereich eine Streckung (positive Dehnung) erfährt. Zwischen diesen Bereichen ist ein Bereich angeordnet, der keine Dehnung durch die Biegung erfährt. Dieser wird als neutrale Faser bezeichnet. Zusätzlich zu der Biegung existiert die oben genannte Schubverformung.

Die in der Figur 3 dargestellt Schiene 320 weist in einem unteren Abschnitt einen Fuß 322 und in einem oberen Abschnitt einen Kopf 324 auf. Zwischen diesen ist ein näherungsweise rechteckiger Bereich 326 ausgebildet. Wirkt eine mechanische Größe auf die Schiene 320 ein, so verformt sich die Schiene 320 unter Ausbildung einer neutralen Faser 328 wie oben beschrieben. Die Schiene 320 ist dabei vorzugsweise so ausgebildet, dass die neutrale Faser 328 im rechteckigen Bereich 326 ausgebildet ist.

Die faseroptische Sensoreinheit schließt mit der neutralen Faser einen Winkel größer oder kleiner als 0° ein Die faseroptischen Sensoreinheit wird unter einem Winkel von 30° bis 60°, insbesondere 45°, relativ zur neutralen Faser oder unter einem Winkel von -30° bis -60°, insbesondere -45°, relativ zur neutralen Faser angeordnet.

Ein Anbringen der faseroptische Sensoreinheit 330 unter einem Winkel von $\pm 30°$ bis $\pm 60°$, insbesondere $\pm 45°$, relativ zur neutralen Faser bietet den Vorteil, dass von der faseroptischen Sensoreinheit Schubverformungen erfasst werden, die zu einer positiven oder negativen Dehnung führen, die nicht parallel zur neutralen Faser verlaufen.

Die faseroptische Sensoreinheit wird an der neutralen Faser angebracht, und diese derart überspannen, dass die optische Sensoreinheit an zwei Positionen an der Schiene befestigt ist, so dass, die Sensoreinheit sich mit der neutralen Faser kreuzt, d.h. ein Befestigungspunkt auf einer Seite der neutralen Faser angeordnet ist und der andere Befestigungspunkt auf der gegenüberliegenden Seite der neutralen Faser angeordnet ist. Insbesondere können die Befestigungspunkte von der neutralen Faser gleichweit beanstandet sein, also relativ zur neutralen Faser symmetrisch, insbesondere punktsymmetrisch, angeordnet sind.

In der Figur 3 ist die faseroptische Sensoreinheit 330 über zwei Befestigungspunkte 332, 334 an der Schiene 320 angebracht, die zum Beispiel den gleichen Abstand von der neutralen Faser aufweisen. Dadurch heben sich die an den Befestigungspunkten 332, 334 durch eine auf die Schiene einwirkende mechanische Größe hervorgerufenen Biegeverformungen gegenseitig auf, wodurch die Schubverformung im Wesentlichen direkt oder im Wesentlichen ungestört gemessen wird.

Gemäß manchen Ausführungsformen, die mit anderen Ausführungsformen kombiniert werden können, kann die faseroptische Sensoreinheit im Wesentlichen an oder auf der neutralen Faser angeordnet sein bzw. diese überspannen, d.h. überkreuzen. Gemäß manchen Ausführungsformen, die mit anderen Ausführungsformen kombiniert werden können, kann die faseroptische Sensoreinheit unter einem Winkel von 30° bis 60°, insbesondere 45°, relativ zur neutralen Faser oder unter einem Winkel von -30° bis -60°, insbesondere -45°, relativ zur neutralen Faser angeordnet werden. Insbesondere kann die faseroptische Sensoreinheit im Wesentlichen an oder auf der neutralen Faser angeordnet sein bzw. diese überspannen, d.h. überkreuzen und unter einem Winkel von 30° bis 60°, insbesondere 45°, relativ zur neutralen Faser oder unter einem Winkel von -30° bis -60°. Durch solche Anbringungsarten werden nur Schubverformungen in den Sensor eingeleitet. Diese sind unabhängig von der Biegung der Schiene und damit unabhängig von der genauen Auflagerung der Schiene auf dem Gleisbett und den Schwellen.

Die in Fig. 3 gezeigte optische Messvorrichtung weist eine Primärlichtquelle 341, einen Faserkoppler 343 und einen Fotodetektor 345 auf. Eine optische Übertragungsfaser 342 ist zwischen der Primärlichtquelle 341 und dem Faserkoppler 343 bereitgestellt. Der Faserkoppler 343 richtet das Primärlicht 201 der Primärquelle 341 auf die faseroptische Sensoreinheit 330 aus. Die von der faseroptischen Sensoreinheit 330 in Abhängigkeit von der auf die Schiene 150 einwirkenden mechanischen Größe zurückgegebenen Sensorreflexionsantwort 400, d.h. das Signallicht, wird wiederum zu dem Faserkoppler 343 weitergeleitet. In dem Faserkoppler 343 wird das zurückgeführte Licht bzw. ein Teil des zurückgeführten Lichts als Sekundärlicht 347 oder Signallicht 347 dem Fotodetektor 345 zugeführt. Ein Detektor erfasst die Intensitätsverteilung, vorzugsweise die Intensität des Signallichts. Beispielsweise löst der Detektor eine Änderung der Mittenwellenlänge 403 des von der faseroptischen Sensoreinheit zurückreflektierten Sekundärlichts 347 auf.

Ferner kann ein Strahlteiler 344 zwischen dem Faserkoppler 343 und dem Fotodetektor 345 vorgesehen sein, der das auf ihn einfallenden Licht aufteilt und einen ersten Teil 347a an einen Fotodetektor 345 leitet und einen zweiten Teil 347b über einen Filter 346 an einen zweiten Fotodetektor 348 leitet. Der Filter 346 ist vorzugsweise als Kantenfilter ausgestaltet.

Die Auswertung der Signale am ersten Fotodetektor 345 und/oder am zweiten Fotodetektor 348 erfolgt in einer nicht dargestellten Auswerteeinheit, in der insbesondere das Signallicht ausgewertete werden kann. Beispielsweise können die Signale zusammen verarbeitet bzw. miteinander verrechnet werden. Vorzugsweise sind der erste und/oder der zweite Fotodetektor als Fotodiode, Fotomultiplier, Lawinenfotodiode oder ähnliches ausgestaltet. Derartige Fotodetektoren wandeln das eintreffende Signallicht in einen Fotostrom um, was eine schnelle und einfach Auswertung ermöglicht. Beispielsweise kann eine Differenz der an den als Fotodioden ausgebildeten Fotodetektoren 345, 348 erzeugten Signale gebildet werden.

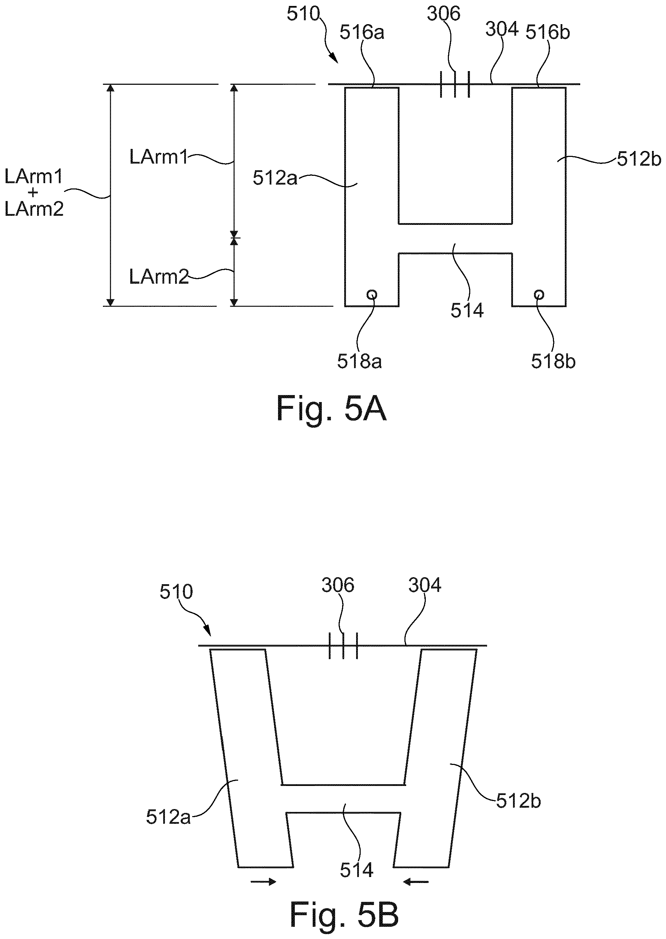

Gemäß typischen Ausführungsformen, kann ein Detektor das Signallicht spektral integrieren, d.h. ohne eine spektrale Auflösung die Intensität, zum Beispiel nach dem Kantenfilter, detektieren. Die optischen Signale der Fotodioden können nach dem Kantenfilter hochfrequent, insbesondere größer 5 kHz, vorteilhafterweise größer 8 kHz, typischerweise größer 10 kHz ausgelesen werden, da eine einfache Abtastung der Fotoströme erfolgt. Alternativ kann eine Detektion auch mittels eines Spektrometers oder ähnlichem erfolgen, um die von der faseroptischen Sensoreinheit 330 zurück reflektierte Wellenlängenverteilung nach ihrem Spektrum aufzulösen. Die Verwendung von Fotodetektoren, insbesondere Fotodioden, bietet jedoch den Vorteil einer hochfrequenten Abtastung bei einfachem Messaufbau. Ferner kann über die Wahl einer Steigung der Filterkennlinie des Kantenfilters, eine Änderung des Dynamikbereichs bewirkt werden. Die Nenn-Steigung der Filterkennlinie ist dabei vorzugsweise kleiner als 8 % nm, liegt insbesondere in einem Bereich von 2 % - 7 %, bezogen auf die transmittierte Intensität. Die Nenn-Steigung bezeichnet dabei beispielsweise die mittlere Steigung des Kantenfilters, die Steigung in einem maßgeblichen/überwiegenden Bereich des Kantenfilters oder eine Steigung, die charakteristisch für den Kantenfilter ist, wie sie beispielsweise als repräsentativer Wert genannt wird, um verschiedene Kantenfilter bezüglich ihrer Steigung miteinander zu vergleichen. Ferner beträgt eine typische Mittenwellenlänge 403 des von dem Faser-Bragg-Gitter 306 zurückreflektieren Lichts ca. 1550 nm. Weitere Aspekte der Änderung des Dynamikbereichs werden unter Bezugnahme auf die Figuren 5A und 5B dargelegt.

Das Auslesen des Faser-Bragg-Gitter Signals, also die durch die auf die Schiene einwirkende mechanische Größe hervorgerufene Signaländerung der faseroptischen Sensoreinheit, kann durch den eben dargestellten Kantenfilteraufbau erfolgen, wodurch eine hochfrequente Messung durchgeführt werden kann.

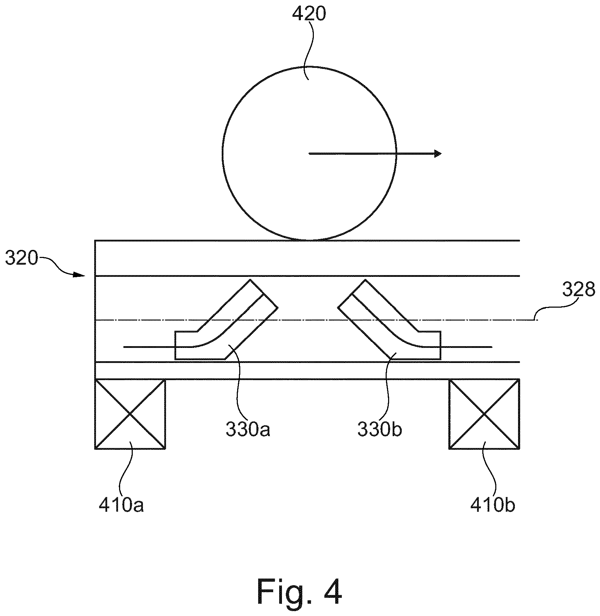

Ferner sind in der Figur 3 zwei faseroptische Sensorelemente gezeigt. Gemäß manchen Ausführungsformen wird eine zweite oder weitere faseroptischen Sensoreinheit unter einem weiteren Winkel von 30° bis 60°, insbesondere 45°, relativ zur neutralen Faser oder unter einem weiteren Winkel von -30° bis -60°, insbesondere -45°, relativ zur neutralen Faser bereitgestellt, um den Anwendungsbereich zu vergrößern. Dies wird im Zusammenhang mit der Figur 4 dargestellt. Insbesondere unterscheidet sich das Vorzeichen des weiteren Winkels der weiteren faseroptischen Sensoreinheit von dem Vorzeichen des Winkels der faseroptischen Sensoreinheit. Hierbei kann durch eine Addition dieser Beiden Signale ein Signal zur Verfügung gestellt werden, das proportional zur Last auf der Schiene ist.

Es sei hier darauf hingewiesen, dass, obwohl in Fig. 3 die Verwendung von zwei faseroptischen Sensoreinheiten dargestellt ist, drei oder mehr faseroptischen Sensoreinheiten verwendet werden können, um beispielsweise die Messgenauigkeit zu erhöhen. Gemäß manchen Ausführungsformen können weitere faseroptische Sensoreinheiten, d.h. eine dritte oder vierte Sensoreinheit ebenfalls unter den hier beschriebenen Winkeln angeordnet sein. Sie können aber auch unter anderen Winkeln wie zum Beispiel 0° oder 90° relativ zur neutralen Faser angeordnet sein.

Das Primärlicht kann vor einem Bestrahlen der faseroptischen Sensoreinheiten durch die Primärlichtquelle 341 intensitätsmoduliert werden, um beispielsweise mittels einer Lock-In-Technik unerwünschte Störungen zu eliminieren oder zumindest zu verringern. Bei einer Intensitätsmodulation des Primärlichts 201 durch die Primärlichtquelle 341 kann die Modulationsfrequenz den Fotodetektoren zur Verfügung gestellt werden, um eine synchronisierte Detektion in den Fotodetektoren zu ermöglichen.

Ferner sei hier darauf hingewiesen, dass, obwohl eine Messung in Reflexion in Fig. 3 veranschaulicht ist, die als Faser-Bragg-Gitter ausgebildeten faseroptischen Sensoreinheiten auch in Transmission betrieben werden können, derart, dass transmittiertes Primärlicht 201 als ein Sekundärlicht (transmittiertes Sekundärlicht) 202 der optischen Messvorrichtung zugeführt wird.

Die Figur 4 zeigt ein Schemabild eines Schienenmesssystems gemäß einem weiteren Ausführungsbeispiel. Es sei hier darauf hingewiesen, dass Komponenten, die bereits unter Bezugnahme auf Fig. 3 beschrieben worden sind, hier nicht erneut erwähnt sind, um eine redundante Beschreibung zu vermeiden. Wie in der Figur 4 gezeigt, umfasst das Schienenmesssystem die Schiene 320 und mindestens eine faseroptisches Sensoreinheit 330. Die Schiene 320 liegt auf einer Vielzahl von Schwellen auf. In der Figur 4 sind zwei Schwellen 410a, 410b gezeigt, zwischen denen mindestens eine faseroptische Sensoreinheit, typischerweise zwei faseroptisches Sensoreinheit 330a, 330b angeordnet sind. Gemäß hier beschriebenen Ausführungsformen kann zumindest eine Sensoreinheit 330, insbesondere zumindest zwei Sensoreinheiten, so an der Schiene angebracht werden, dass sie mit der neutralen Faser einen Winkel von $\pm30°$ bis $\pm60°$, typischerweise $\pm45°$ einschließen. Gemäß einer anderen Ausführungsform ist es bevorzugt, dass die mindestens eine faseroptische Sensoreinheit 330 die neutrale Faser symmetrisch, insbesondere punktsymmetrisch überspannt. Sie also über zwei Befestigungspunkte 332, 334 an der Schiene 320 angebracht ist, die von der neutralen Faser gleichweit beabstandet sind. Ferner illustriert Bezugszeichen 420 exemplarisch die Räder eines über die Schiene 320 fahrenden Zuges.

Der vorbeifahrende Zug übt über seine Räder 420 eine Kraft auf die Schiene 320 aus, wodurch sich, wie oben diskutiert, die Schiene 320 verformt. Dadurch wird die mindestens eine faseroptische Sensoreinheit positiv oder negativ gedehnt. Dies führt zu einer Änderung der von der mindestens einen faseroptischen Sensoreinheit reflektierten bzw. transmittierten Wellenlängenverteilung. Diese wird als Messsignal erfasst und ausgewertet, um Rückschlüsse auf den vorbeifahrenden Zug ziehen zu können. Beispielsweise kann die von dem über die Schiene fahrenden Zug verursachte Schubverformung ermittelt werden.

Gemäß manchen Ausführungsformen kann zumindest eine faseroptische Sensoreinheit an einer Messposition zur Verfügung gestellt werden. Eine Auswertung des Messsignals kann hierbei zur Achszählung verwendet werden. Das Messsignal entspricht hier dem von der faseroptischen Sensoreinheit reflektierten und/oder transmittiert Licht, also dem Signallicht.

Gemäß anderen Ausführungsformen können, wie in der Figur 4 dargestellt, zumindest zwei faseroptische Sensoreinheiten an zwei Messpositionen bereitgestellt werden. Alternativ oder zusätzlich kann eine faseroptische Sensoreinheit auch zwei oder mehrere optische Fasern mit Faser-Bragg-Gitter aufweisen, die an derselben oder unterschiedlichen Messpositionen angebracht werden können. Jede faseroptische Sensoreinheit kann also mindestens ein in einer optischen Faser zur Verfügung gestelltes Faser-Bragg-Gitter aufweisen, das eine von einer einwirkenden mechanischen Größe abhängige Bragg-Wellenlänge aufweist. Eine Auswertung der Messsignale der mindestens zwei faseroptischen Sensoreinheiten oder der mindestens einen faseroptischen Sensoreinheit mit mindestens zwei Faser-Bragg-Gittern kann eine Bestimmung der Last auf der Schiene, eine Geschwindigkeitsmessung, eine Richtungserkennung vorbeifahrender Züge, Radschäden von Zügen auf der Schiene und/oder eine Zugklassifikation vorbeifahrender Züge umfassen.

In der Figur 4 sind zwei faseroptische Sensoreinheiten 330a, 330b an zwei Messpositionen an der Schiene 320 angebracht. Die Schiene 320 kann hierbei in drei Abschnitte unterteilt werden. Ein erster Abschnitt ist in der Nähe der ersten Schwelle 410a und zwischen der ersten und der zweiten Schwelle 410a angeordnet, ein zweiter Abschnitt ist dabei zwischen der ersten und der zweiten Schwelle 410a, 410b angeordnet und ein dritter Abschnitt ist in der Nähe der zweiten Schwelle 410b und zwischen der ersten und der zweiten Schwelle 410a angeordnet, wobei der zweite Abschnitt zwischen dem ersten und dem dritten Abschnitt liegt. Zum Beispiel teilen der erste, der zweite und der dritte Abschnitt den Bereich zwischen zwei Schwellen in drei gleichgroße Drittel. Vorzugsweise ist die erste faseroptische Sensoreinheiten 330a im ersten Abschnitt angebracht und die zweite faseroptische Sensoreinheiten 330b ist vorzugsweise im dritten Abschnitt angebracht. Gemäß manchen Ausführungsformen, die mit anderen Ausführungsformen kombiniert werden können, können die faseroptische Sensoreinheiten auch im Bereich der Schwelle sein, d.h. näher als in einem Bereich von 30% des Abstandes zwischen den Schwellen. Zum Beispiel können der erste und/oder der der dritte Abschnitt 15% des Bereiches zwischen zwei Schwellen sein, und der zweite Abschnitt 70% des Bereiches zwischen zwei Schwellen sein. Wie in der Figur 4 dargestellt, schließt die erste faseroptische Sensoreinheit 330a einen positiven Winkel mit der neutralen Faser 326 ein und die zweite faseroptische Sensoreinheit 330b schließt einen negativen Winkel mit der neutralen Faser 326 ein. Insbesondere können die erste und die zweite faseroptische Sensoreinheit 330a, 330b einen betragsmäßig gleichen Winkel mit unterschiedlichem Vorzeichen aufweisen. Typischerweise sind die erste und zweite faseroptische Sensoreinheit 330a, 330b spiegelsymmetrisch angeordnet.

Gemäß manchen Ausführungsformen ist die mindestens eine faseroptische Sensoreinheit mit einem variablen Winkel relativ zur neutralen Faser bereitgestellt, der sich mit dem Abstand der faseroptischen Sensoreinheit zur Schwelle ändert. Insbesondere ist der variable Winkel steiler, wenn die faseroptische Sensoreinheit in der Nähe der Schwelle angeordnet ist, und wird flacher, je weiter die faseroptische Sensoreinheit in der Mitte zwischen zwei benachbarten Schwellen angebracht ist. Dies bietet den Vorteil, die faseroptischen Sensoreinheit auf die in unterschiedlichen Richtungen entlang der Schiene wirkenden Schubspannungen ausrichten zu können.

Gemäß machen Ausführungsbeispielen kann eine Auswertung eines hochfrequenten Messsignals erfolgen, um vorbeifahrende Hochgeschwindigkeitszüge erfassen zu können. Hier sind Messraten von größer 5 kHz, typischerweise größer 8 kHz, insbesondre größer 10 kHz vorteilhaft. Typischerweise können die optischen Signale nach dem Kantenfilter hochfrequent ausgelesen werden, da eine einfache, elektrische Abtastung der Fotoströme erfolgt.

Durch Anbringen der optische Faser bzw. der faseroptischen Sensoreinheit in einem Winkel relativ zur neutralen Faser, typischerweise 30° - 60°, insbesondere 45°, so dass die optische Faser bzw. die faseroptischen Sensoreinheit die neutralen Faser der Schiene mittig überspannt, werden nur Schubverformungen in den Sensor eingeleitet. Diese sind unabhängig von der Biegung der Schiene und damit unabhängig von der genauen Auflagerung der Schiene auf dem Gleisbett und den Schwellen. Durch Verwendung zweier paralleler Messsysteme dieses Typs und Anbringung der Sensoren in Winkeln mit unterschiedlichen Vorzeichen nahe beieinander, sowie Addition dieser Beiden Signale kann ein Signal proportional zur Last auf der Schiene erzeugt werden.

Ferner treten durch vorbeifahrende Züge Achslasten von 200 kg bis 50.000 kg auf ein und derselben Schiene auf, was einen hohen Dynamikbereich (großer Messbereich) bedingt. Der hohe Dynamikbereich erfordert ein deutliches Abheben des Messsignals vom Untergrund der Messunsicherheit (hohes Signal zu Rauschverhältnis), um auch kleine Signale sicher detektieren zu können (Sicherheitsanforderungen von besser 1 ppm Fehlerquote). Bei kleinen Signalen besteht bei der Messung mittels Faser-Bragg-Gitter Sensoren das Problem des Polarisationsfehlers. Dieser Fehler stellt einen inhärenten Messfehler des Systems dar und ist für diese Messsysteme eine fixe Größe, die von dem verwendeten Faser-Auflagerung der Schiene auf dem Gleisbett und den Schwellen. Durch Verwendung zweier paralleler Messsysteme dieses Typs und Anbringung der Sensoren in Winkeln mit unterschiedlichen Vorzeichen nahe beieinander, sowie Addition dieser Beiden Signale kann ein Signal proportional zur Last auf der Schiene erzeugt werden.

Ferner treten durch vorbeifahrende Züge Achslasten von 200 kg bis 50.000 kg auf ein und derselben Schiene auf, was einen hohen Dynamikbereich (großer Messbereich) bedingt. Der hohe Dynamikbereich erfordert ein deutliches Abheben des Messsignals vom Untergrund der Messunsicherheit (hohes Signal zu Rauschverhältnis), um auch kleine Signale sicher detektieren zu können (Sicherheitsanforderungen von besser 1 ppm Fehlerquote). Bei kleinen Signalen besteht bei der Messung mittels Faser-Bragg-Gitter Sensoren das Problem des Polarisationsfehlers. Dieser Fehler stellt einen inhärenten Messfehler des Systems dar und ist für diese Messsysteme eine fixe Größe, die von dem verwendeten Faser-Bragg-Gitter Sensor vorgegeben ist. Da die Signalhöhe durch die Dehnungen auf der Schiene fest vorgegeben ist, kann dieses Signal zu Messunsicherheitsverhältnis nicht einfach überwunden werden. Dadurch können sehr kleine Achslasten nicht sicher detektiert werden. Folglich schlagen manche Ausführungsformen der vorliegenden Erfindung ein Verstärken der bestehenden Dehnung auf der Schiene durch einen geeigneten Hebelaufbau bzw. Wandlerstruktur vor.

Die Figuren 5A und 5B zeigen Schemabilder einer in einer faseroptischen Sensoreinheit verwendeten Wandlerstruktur.

Wie in der Figur 5A gezeigt, weist die Wandlerstruktur 510 eine H-förmige Form auf, ohne jedoch auf diese beschränkt zu sein. Prinzipiell kann die Wandlerstruktur jede geeignete Form aufweisen, so lang sie eine Verstärkung der Dehnung der Schiene auf die optische Faser mit dem Faser-Bragg-Gitter bereitstellt, um die Empfindlichkeit zu erhöhen. Die in der Figur 5A gezeigte Wandlerstruktur weist zwei voneinander beabstandete Stäbe 512a, 512b und einen die Stäbe 512a, 512b verbindenden Steg 514 auf. Der Steg 514 stellt gleichzeitig den Fixpunkt bzw. Drehpunkt der Wandlerstruktur dar, um den sich die Wandlerstruktur bei Krafteinwirkung dreht.

Eine optische Faser 304 mit einem zur Verfügung gestellten Faser-Bragg-Gitter 306 ist an zwei Aufhängpunkten 516a, 516b in einem ersten Abschnitt zwischen den zwei Fix- oder Drehpunkts der Wandlerstruktur relativ zu den Befestigungspunkten an der Schiene und den Aufhängpunkten für die optische Faser entscheidet also über das Vorzeichen des Hebelverhältnisses. Vorzugsweise ist das Hebelverhältnis k betragsmäßig größer als 1, insbesondere größer als 2, vorzugsweise zwischen 2 und 3.

Die Figur 5B zeigt die Wandlerstruktur, wenn sich die Schiene dehnt, beispielsweise unter Einfluss einer mechanischen Kraft oder durch Temperaturänderung. Wie in der Figur 5B gezeigt, ändert sich der Abstand der Befestigungspunkte 518a, 518b zueinander, was zu einer Änderung des Abstandes der Aufhängpunkten 516a, 516b führt. Vorzugsweise ist das Hebelverhältnis betragsmäßig größer als 1, insbesondere größer als 2, vorzugsweise zwischen 2 und 3. Dadurch wird die optische Faser 304 stärker gedehnt (positiv bzw. negativ) als die Schiene 320, was zu einer Verstärkung des Messsignals verstärkt führt. Dadurch wird das Signal zu Messunsicherheitsverhältnis gesteigert, wodurch auch kleine Signale sicher erfasst werden können.

Gemäß typischen Ausführungsformen, die mit anderen Ausführungsformen kombiniert werden können, ist die Verstärkung bzw. das Hebelverhältnis k betragsmäßig größer als 1. Das Übersetzungsverhältnis kann negativ sein, wie zum Beispiel in FIGS. 5A und 5B dargestellt oder es kann positiv sein, insbesondere wenn die Befestigungspunkte der Wandlerstruktur für die Befestigung an der Schiene und die Aufhängpunkte der Faser an der Wandlerstruktur auf derselben Seite des Fix- oder Drehpunktes des Hebels angeordnet sind. FIGS. 5A und 5B stellen eine beispielhafte Anordnung dar. Weitere Ausgestaltungen von Hebeln sind im Rahmen von hier beschriebenen Ausführungsformen ebenfalls möglich, wobei k betragsmäßig größer 1 ist und insbesondere die unten beschrieben Temperaturkompensation ermöglicht wird. In Abhängigkeit der Form des Hebels, zum Beispiel in Abhängigkeit davon, ob das Übersetzungsverhältnis positiv oder negativ ist, kann die Faser mit weniger oder mehr Vorspannung zwischen den Aufhängpunkten 516a, 516b befestigt sein.

Dies führt auch zu einer Erhöhung der Empfindlichkeit. Gemäß machen Ausführungsformen kann die Steigung des Kantenfilters entsprechend flach gewählt werden, dieser kann insbesondere eine Nenn-Steigung kleiner 8 % pro nm, insbesondere zwischen 2 % und 7 % pro nm, bezogen auf die transmittierte Intensität, aufweisen, um den gesamten Messbereich bzw. Dynamikbereich abzudecken. Somit wird im Rahmen der hier beschriebenen Ausführungsformen die Empfindlichkeit durch die Wandlerstruktur erhöht und der Messbereich durch die hier beschriebene flache Steigung des Kantenfilters ebenfalls erhöht. Dies erlaubt eine sichere Messung von stark variierenden Achslasten.

Durch die in den Fig.3 und Fig. 4 gezeigte optische und elektrische Anordnung wird also ein Messsystem auf Basis von Faser-Bragg-Gitter-Sensoren bereitgestellt, das eine mechanische Größe mittels optischer Elemente in ein elektrisches Signal umwandeln kann. Ferner kann die mechanisch einwirkende Größe über eine in der Fig. 5 gezeigte Wandlerstruktur vergrößert werden, was eine Änderung des optischen Signals bedingt, die sich durch eine vergrößerte Empfindlichkeit bemerkbar macht, was von Elektronik ausgewertet werden muss. Somit sind die Anforderungen an die Auswerteeinheit hinsichtlich des Messbereichs erhöht, allerdings wird das Signal mit einem besseren Signal-zu-Rausch-Verhältnis bereitgestellt, was zu einer geringeren Fehlerquote führt. Typischerweise wird der Messbereich des Messgeräts durch Einstellen der Filterkante so eingestellt, dass er zum neuen Dynamikbereich des Dehnungssignals passt. Bei machen Ausführungsformen wird die Filterkennlinie des Filters im Messgerät abgeflacht, zum Beispiel auf 8 % pro nm oder darunter, insbesondere auf einen Wert zwischen 2 % und 7 % pro nm, bezogen auf die transmittierte Intensität. Dadurch werden Messfehler des Messgeräts weiter verringert.

Gemäß machen Ausführungsformen kann das Messsignal durch die Wandlerstruktur auch soweit verstärkt werden, dass das Messsignal bei hohen Lasten aus dem Messbereich läuft. Hier erfolgt dann ein Clipping des Messsignals. Zwar ist dann nicht mehr der korrekte Messwert für die Achslast quantitativ erfassbar, jedoch kann eine qualitative Aussage getroffen werden. Beispielsweise kann die Auswerteinheit eine Ausgabe erzeugen, die dem Vorbeifahren eines Zuges mit einem Gewicht größer als ein vorgegebener Wert entspricht. Ferner kann solch ein Signal zur Achszählung verwendet werden.

Beispielsweise kann ein Clipping erfolgen, wenn das Messsignal aus dem Filterbereich des Kantenfilters hinaus läuft, dieses also von dem Kantenfilter nicht mehr gefiltert oder verändert wird, so dass eine differenzielle Auswertung mit dem ungefilterten Signal keinen quantitativen Unterschied mehr aufzeigt. Dies ist beispielsweise dann der Fall, wenn ein Zug mit so hoher Achslast an der faseroptischen Sensoreinheit vorbeifährt oder im Bereich der faseroptischen Sensoreinheit zum Stehen kommt, dass das erzeugte Messsignal in einem Bereich des Kantenfilters liegt, in dem dieser keine relevante Steigung mehr aufweist.

Ferner kann eine Form von Clipping auch in der optischen Faser 304 auftreten. Diese ist gemäß manchen Ausführungsformen mit einer Vorspannung zwischen den Aufhängpunkten der Wandlerstruktur oder an der Schiene aufgehängt, so dass auch Kontraktionen (negative Dehnungen) zu einem Messsignal führen. Die Vorspannung kann dabei so gewählt werden, dass die optische Faser 304 ab dem Auftreten einer bestimmten mechanischen Krafteinwirkung eine so hohe Kontraktionen erfährt, dass die Vorspannung aufgebraucht ist und die optische Faser 304 insbesondere durchhängt. In diesem Fall kann zwar keine quantitative Aussage mehr getroffen werden. Jedoch wird immer noch ein dem vorbeifahrenden Zug entsprechendes Messsignal erzeugt. Mit diesem kann beispielsweise eine Achszählung oder Geschwindigkeitsbestimmung durchgeführt werden. Typischerweise ist die Vorspannung der optischen Faser so gewählt, dass die durch die mechanische Größe hervorgerufenen Längenänderungen der optischen Faser 304, insbesondere des Faser-Bragg-Gitters 306, zu einer Wellenlängenänderung führen, die in einem Bereich von 5 nm - 10 nm liegen, insbesondere kleiner als 12 nm sind. Liegen die zu erwartenden Längenänderungen beispielsweise an der Grenze oder außerhalb des Bereichs, so biete die soeben beschriebene Art der Aufhängung der optischen Faser den Vorteil, dass die mechanische Beanspruchung der optischen Faser gesenkt werden kann, da diese bei hohen Lasten nicht mehr der hohen Längenänderung folgen muss.

Gemäß einer Ausführungsform kann ein Messverfahren mit einer Sensoreinheit gemäß hier beschriebenen Ausführungsformen bzw. mit einem Schienenmesssystem gemäß hier beschriebenen Ausführungsformen zur Verfügung gestellt werden, wobei in einem ersten Messbereich ein zur Achslast proportionales Signal erzeugt wird und in eine, zweiten Messbereich, insbesondere für Achslasten, die höher sind als im ersten Messbereich, ein zur Achslast unproportionales Signal erzeugt wird, zum Beispiel ein Signal das lediglich die Existenz einer Achslast anzeigt. Der zweite Bereich kann durch Clipping nach zum Beispiel einem der oben genannten Aspekten erfolgen.

Die eben beschriebenen Längenänderungen müssen nicht den gesamten Aussteuerbereich der optischen Faser 304 bzw. des Faser-Bragg-Gitters 306 umfassen. Typischerweise wird die optische Faser 304 mit solch einer Vorspannung belegt, dass die Mittenwellenlänge 403 ohne Einwirken einer mechanischen Größe von Außen, beispielsweise die durch einen vorbeifahrenden Zug einwirkende mechanische Größe, etwa in der Mitte des zur Verfügung stehenden Aussteuerbereichs liegt, um beispielsweise eine Temperaturänderung kompensieren zu können.

Ferner kann die Wandlerstruktur durch geeignete Wahl der Materialen und Abmessungen, insbesondere zusammen mit der Wahl einer geeigneten Vorspannung für die optische Faser, zur Temperaturkompensation verwendet werden. Durch Temperaturänderungen kommt es zu einer Dehnung der Schiene. Diese Dehnung kann einen Offset oder Versatz des Signals erzeugen und zu Messfehlern führen. Deswegen ist es für absolute Messanwendungen, wie beispielsweise Lastmessung und Zugverwiegung eine Temperaturkompensation vorteilhaft.

Gemäß manchen hier beschriebenen Ausführungsformen kann durch Einstellen des Ausdehnungskoeffizienten des Hebels eine Temperaturkompensation erreicht werden. Hierbei werden die Geometrie und das Material des Hebels so gewählt, dass die Ausdehnung der Faser und der Schiene gerade zu Null kompensiert werden. Gemäß machen Ausführungsformen ist zur Temperaturkompensation der Ausdehnungskoeffizient der Wandlerstruktur bei einer Wandlerstruktur mit negativem Übersetzungsverhältnis kleiner als der Ausdehnungskoeffizient der Schiene. Gemäß anderen Ausführungsformen ist der zur Temperaturkompensation der Ausdehnungskoeffizient der Wandlerstruktur bei einer Wandlerstruktur mit positivem Übersetzungsverhältnis größer als der Ausdehnungskoeffizient der Schiene.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

**Patentansprüche**

1. Verwendung mindestens einer faseroptischen Sensoreinheit (303; 330; 330a, 330b) zum Messen einer mechanischen Größe, die auf eine Schiene (320) mit einer Längserstreckung und einer sich entlang der Längserstreckung erstreckenden neutralen Faser (328) einwirkt, umfassend:

   Befestigen der mindestens einen faseroptischen Sensoreinheit (303; 330; 330a, 330b) an der Schiene (320);
   Bestrahlen der mindestens einen faseroptischen Sensoreinheit (303; 330; 330a, 330b) mit Primärlicht (204) zur Erzeugung eines Signallichts (347) in Reflexion oder Transmission;
   Erfassen der Intensität des Signallichts (347); und
   Auswerten des Signallichts (347),
   **dadurch gekennzeichnet,**
   **dass** die mindestens einen faseroptischen Sensoreinheit (303; 330; 330a, 330b) unter einem Winkel von 30° bis 60°, insbesondere 45°, relativ zur neutralen Faser (328) der Schiene (320) oder unter einem Winkel von -30° bis -60°, insbesondere -45°, relativ zur neutralen Faser (328) der Schiene (320) an der Schiene (320) befestigt wird, wobei ein Befestigungspunkt (332) der faseroptischen Sensoreinheit (303; 330; 330a, 330b) auf einer Seite der neutralen Faser (328) und ein anderer Befestigungspunkt (334) auf der gegenüberliegenden Seite der neutralen Faser (328) angeordnet ist.

2. Die Verwendung gemäß Anspruch 1, wobei die Auswertung die durch eine über die Schiene (320) fahrenden Zug verursachte Schubverformungen der Schiene (320) ermittelt.

3. Die Verwendung nach einem der Ansprüche 1 bis 2, wobei die Auswertung eine Zählung der Achsen beinhaltet, die über die faseroptische Sensoreinheit (303; 330; 330a, 330b) fahren.

4. Die Verwendung nach einem der Ansprüche 1 bis 3, ferner umfassend:
   Bereitstellen einer weiteren faseroptischen Sensoreinheit (303; 330; 330b) unter einem weiteren Winkel von 30° bis 60°, insbesondere 45°, relativ zur neutralen Faser (328) oder unter einem weiteren Winkel von -30° bis -60°, insbesondere -45°, relativ zur neutralen Faser (328).

5. Die Verwendung nach Anspruch 4, wobei das Vorzeichen des weiteren Winkels sich von dem Vorzeichen des Winkels unterscheidet.

6. Die Verwendung nach einem der Ansprüche 4 bis 5, wobei die Auswertung eine Bestimmung der Last auf der Schiene (320), eine Geschwindigkeitsmessung, eine Richtungserkennung vorbeifahrender Züge, Radschäden von Zügen auf der Schiene (320) und/oder eine Zugklassifikation vorbeifahrender Züge umfasst.

**7.** Die Verwendung nach einem der Ansprüche 1 bis 6, wobei die faseroptische Sensoreinheit (303; 330; 330a, 330b) eine Wandlerstruktur aufweist, die die auf die Sensoreinheit (303; 330; 330a, 330b) einwirkende mechanische Größe verstärkt.

**8.** Schienenmesssystem, umfassend:

eine Schiene (320) mit einer Längserstreckung und einer sich entlang der Längserstreckung ersteckenden neutralen Faser (328), auf die eine durch einen darüberfahrenden Zug erzeugte mechanische Kraft einwirkt; und mindestens eine faseroptische Sensoreinheit (303; 330; 330a, 330b), typischerweise zwei faseroptische Sensoreinheiten (303; 330; 330a, 330b), zum Erfassen der auf die Schiene (320) einwirkenden mechanischen Kraft, wobei eine faseroptische Sensoreinheit (303; 330; 330a, 330b) umfasst:

ein Faser-Bragg-Gitter (306), welches eine von der mechanischen Größe abhängige Bragg-Wellenlänge aufweist;
**dadurch gekennzeichnet,**
**dass** die mindestens eine faseroptische Sensoreinheit (303; 330; 330a, 330b) unter einem Winkel von 30° bis 60°, insbesondere 45°, relativ zur neutralen Faser (328) oder unter einem Winkel von -30° bis -60°, insbesondere -45°, relativ zur neutralen Faser (328) der Schiene (320) an der Schiene (320) angebracht ist, wobei ein Befestigungspunkt (332) der faseroptischen Sensoreinheit (303; 330; 330a) auf einer Seite der neutralen Faser (328) und ein anderer Befestigungspunkt (332) auf der gegenüberliegenden Seite der neutralen Faser (328) angeordnet ist.

**9.** Schienenmesssystem nach Anspruch 8, ferner umfassend:
eine Auswerteeinheit, die für eine Messfrequenz von 5 kHz oder mehr angepasst ist, insbesondere von 8 kHz oder mehr, noch insbesondere von 10 kHz oder mehr.

**10.** Schienenmesssystem nach einem der Ansprüche 8 bis 9, ferner umfassend:

eine Breitbandlichtquelle (341) zum Bestrahlen der faseroptischen Sensoreinheit (303; 330; 330a, 330b) mit Primärlicht (201) zur Erzeugung eines Signallichts (347);
einen Strahlteiler (344) zum Aufteilen des Signallichts (347) in einen ersten Teil (347a) des Signallichts (347) und einen zweiten Teil (347b) des Signallichts (347);
einen ersten Detektor (345) zum Detektieren des ersten Teils (347a) des Signallichts (347) und einen zweiten Detektor (348) zum Detektieren des zweiten Teils (347b) des Signallichts (347).

**11.** Verfahren zum Anbringen einer faseroptischen Sensoreinheit (303; 330; 330a, 330b) an eine Schiene (320), insbesondere einer faseroptischen Sensoreinheit (303; 330; 330a, 330b) mit einem Faser-Bragg-Gitter (306),
**dadurch gekennzeichnet, dass** :
die faseroptischen Sensoreinheit (303; 330; 330a, 330b) unter einem weiteren Winkel von 30° bis 60°, insbesondere 45°, relativ zur neutralen Faser (328) oder unter einem weiteren Winkel von -30° bis -60°, insbesondere -45°, relativ zur neutralen Faser (328) der Schiene (320) angebracht wird, wobei ein Befestigungspunkt (332) der faseroptischen Sensoreinheit (303; 330; 330a) auf einer Seite der neutralen Faser (328) und ein anderer Befestigungspunkt (334) auf der gegenüberliegenden Seite der neutralen Faser (328) angeordnet ist.

**Claims**

**1.** Use of at least one fiber-optic sensor unit (303; 330; 330a, 330b) for measuring a mechanical variable which acts on a rail (320) with a longitudinal extension and a neutral axis (328) which extends along the longitudinal extension, comprising:

mounting the at least one fiber-optic sensor unit (303; 330; 330a, 330b) to the rail (320);
irradiating the at least one fiber-optic sensor unit (303; 330; 330a, 330b) with primary light (204) for generating a signal light (347) in reflection or transmission mode;
detection of the intensity of the signal light (347); and
evaluation of the signal light (347),

**characterized in that**

the at least one fiber-optic sensor unit (303; 330; 330a, 330b) is mounted to the rail (320) at an angle of 30° to 60°, in particular 45°, relative to the neutral axis (328) of the rail (320) or at an angle of -30° to -60°, in particular -45°, relative to the neutral axis (328) of the rail (320), wherein a mounting point (332) of the fiber-optic sensor unit (303; 330; 330a, 330b) is arranged on one side of the neutral axis (328) and a different mounting point (334) is mounted on the opposite side of the neutral axis (328).

2. Use according to claim 1, wherein the evaluation determines the shear deformations of the rail (320) caused by a train running on the rail (320).

3. Use according to any one of the claims 1 to 2, wherein the evaluation includes counting of the axles that run over the fiber-optic sensor unit (303; 330; 330a, 330b).

4. Use according to any one of the claims 1 to 3, further comprising:
provision of a further fiber-optic sensor unit (303; 330; 330b) at a further angle of 30° to 60°, in particular 45°, relative to the neutral axis (328) or at a further angle of -30° to -60°, in particular -45°, relative to the neutral axis (328).

5. Use according to claim 4, wherein the sign of the further angle differs from the sign of the angle.

6. Use according to any one of the claims 4 to 5, wherein the evaluation comprises determination of the load on the rail (320), measurement of the speed, detection of the direction of passing trains, wheel damages of trains on the rail (320) and/or train classification of passing trains.

7. Use according to any one of the claims 1 to 6, wherein the fiber-optic sensor unit (303; 330; 330a, 330b) has a converter structure which amplifies the mechanical variable that acts on the sensor unit (303; 330; 330a, 330b).

8. Rail measuring system comprising:

a rail (320) with a longitudinal extension and a neutral axis (328) which extends along the longitudinal extension, on which rail (320) a mechanical force acts which is generated by a train running thereon; and
at least one fiber-optic sensor unit (303; 330; 330a, 330b), typically two fiber-optic sensor units (303; 330; 330a, 330b) for detecting the mechanical force that acts on the rail (320), wherein a fiber-optic sensor unit (303; 330; 330a, 330b) comprises:

a fiber Bragg grating (306) which has a Bragg wavelength which depends on the mechanical variable,
**characterized in that**
the at least one fiber-optic sensor unit (303; 330; 330a, 330b) is mounted to the rail (320) at an angle of 30° to 60°, in particular 45°, relative to the neutral axis (328) or at an angle of -30° to -60°, in particular -45°, relative to the neutral axis (328) of the rail (320), wherein a mounting point (332) of the fiber-optic sensor unit (303; 330; 330a) is arranged on one side of the neutral axis (328) and a different mounting point (332) is arranged on the opposite side of the neutral axis (328).

9. Rail measuring system according to claim 8, further comprising:
an evaluation unit which is designed for a measuring frequency of 5 kHz or more, in particular of 8 kHz or more, especially of 10 kHz or more.

10. Rail measuring system according to any one of the claims 8 to 9, further comprising:

a broad-band light source (341) for irradiating the fiber-optic sensor unit (303; 330; 330a, 330b) with primary light (201) for generating a signal light (347);
a beam splitter (344) for splitting the signal light (347) into a first part (347a) of the signal light (347) and into a second part (347b) of the signal light (347);
a first detector (345) for detecting the first part (347a) of the signal light (347) and a second detector (348) for detecting the second part (347b) of the signal light (347).

11. Method for mounting a fiber-optic sensor unit (303; 330; 330a, 330b), in particular a fiber-optic sensor unit (303; 330; 330a, 330b) with a fiber Bragg grating (306), to a rail (320),
**characterized in that**
the fiber-optic sensor unit (303; 330; 330a, 330b) is mounted at a further angle of 30° to 60°, in particular 45°, relative to the neutral axis (328) or at a further angle of -30° to -60°, in particular -45°, relative to the neutral axis (328) of the rail (320), wherein a mounting point (332) of the fiber-optic sensor unit (303; 330; 330a) is arranged on a side of the neutral axis (328) and a different mounting point (334) is arranged on the opposite side of the neutral axis (328).

**Revendications**

1. Utilisation d'au moins une unité de capteur à fibres optiques (303 ; 330 ; 330a, 330b) pour mesurer une grandeur mécanique agissant sur un rail (320) présentant une étendue longitudinale et une fibre neutre (328) s'étendant le long de ladite extension longitudinale, comprenant :

   la fixation de l'au moins une unité de capteur à fibres optiques (303 ; 330 ; 330a, 330b) sur le rail (320) ;
   l'exposition de l'au moins une unité de capteur à fibres optiques (303 ; 330 ; 330a, 330b) à une lumière primaire (204) pour générer une lumière de signal (347) en réflexion ou en transmission ;
   la détection de l'intensité de la lumière de signal (347) ; et
   l'évaluation de la lumière de signal (347),

   **caractérisée en ce que** l'au moins une unité de capteur à fibres optiques (303 ; 330 ; 330a, 330b) est fixée au rail (320) selon un angle de 30° à 60°, en particulier de 45°, par rapport à la fibre neutre (328) du rail (320) ou selon un angle de -30° à -60°, en particulier de -45°, par rapport à la fibre neutre (328) du rail (320), dans laquelle un point de fixation (332) de l'unité de capteur à fibres optiques (303 ; 330 ; 330a, 330b) est disposé sur un côté de la fibre neutre (328) et un autre point de fixation (334) est disposé sur le côté opposé de la fibre neutre (328).

2. Utilisation selon la revendication 1, dans laquelle l'évaluation détermine les déformations en cisaillement du rail (320) provoquées par un train se déplaçant sur le rail (320).

3. Utilisation selon l'une des revendications 1 à 2, dans laquelle l'évaluation comprend le comptage des essieux qui passent par l'unité de capteur à fibres optiques (303 ; 330 ; 330a, 330b).

4. Utilisation selon l'une des revendications 1 à 3, comprenant en outre :
   la fourniture d'une autre unité de capteur à fibres optiques (303 ; 330 ; 330b) selon un autre angle de 30° à 60°, en particulier de 45°, par rapport à la fibre neutre (328) ou selon un autre angle de -30° à -60°, en particulier de -45°, par rapport à la fibre neutre (328).

5. Utilisation selon la revendication 4, dans laquelle le signe de l'autre angle diffère du signe de l'angle.

6. Utilisation selon l'une des revendications 4 à 5, dans laquelle l'évaluation comprend une détermination de la charge exercée sur le rail (320), une mesure de vitesse, une reconnaissance de direction des trains lors de leur passage, des endommagements des roues de trains présents sur le rail (320) et/ou une classification des trains lors de leur passage.

7. Utilisation selon l'une des revendications 1 à 6, dans laquelle l'unité de capteur à fibres optiques (303 ; 330 ; 330a, 330b) présente une structure de transducteur qui amplifie la grandeur mécanique agissant sur l'unité de capteur (303 ; 330 ; 330a, 330b).

8. Système de mesure de rails comprenant :

   un rail (320) présentant une étendue longitudinale et une fibre neutre (328) s'étendant le long de l'étendue longitudinale, sur laquelle s'exerce une force mécanique produite par un train passant sur celle-ci ; et
   au moins une unité de capteur à fibres optiques (303 ; 330 ; 330a, 330b), typiquement deux unités de capteurs à fibres optiques (303 ; 330 ; 330a, 330b), pour détecter la force mécanique agissant sur le rail (320), dans lequel une unité de capteur à fibres optiques (303 ; 330 ; 330a, 330b) comprend:

   un réseau de Bragg à fibres optiques (306) ayant une longueur d'onde de Bragg dépendant de la taille mécanique ;
   **caractérisé en ce que** l'au moins une unité de capteur à fibres optiques (303 ; 330 ; 330a, 330b) est fixée au rail (320) selon un angle de 30° à 60°, en particulier de 45°, par rapport à la fibre neutre (328) ou selon un angle de -30° à -60°, en particulier de -45°, par rapport à la fibre neutre (328) du rail (320), dans lequel un point de fixation (332) de l'unité de capteur à fibres optiques (303 ; 330 ; 330a) est disposé sur un côté de la fibre neutre (328) et un autre point de fixation (332) est disposé sur le côté opposé de la fibre neutre (328).

9. Système de mesure de rails selon la revendication 8, comprenant en outre :
une unité d'évaluation conçue pour une fréquence de mesure de 5 kHz ou plus, plus particulièrement de 8 kHz ou plus, et encore plus particulièrement de 10 kHz ou plus.

10. Système de mesure de rails selon l'une des revendications 8 à 9, comprenant en outre :

une source de lumière à large bande (341) destinée à exposer l'unité de capteur à fibres optiques (303 ; 330 ; 330a, 330b). à une lumière primaire (201) afin de générer une lumière de signal (347) ;
un diviseur de faisceau (344) destiné à diviser la lumière de signal (347) en une première partie (347a) de la lumière de signal (347) et en une seconde partie (347b) de lumière de signal (347) ;
un premier détecteur (345) destiné à détecter la première partie (347a) de la lumière de signal (347) et un second détecteur (348) destiné à détecter la seconde partie (347b) de la lumière de signal (347).

11. Procédé de fixation d'une unité de capteur à fibres optiques (303 ; 330 ; 330a, 330b) sur un rail (320), en particulier une unité de capteur à fibres optiques (303 ; 330 ; 330a, 330b) comportant un réseau de Bragg à fibres optiques (306), **caractérisé en ce que** :
l'unité de capteur à fibres optiques (303 ; 330 ; 330a, 330b) est montée selon un autre angle de 30° à 60°, en particulier de 45°, par rapport à la fibre neutre (328) ou selon un autre angle de -30° à -60°, en particulier de -45°, par rapport à la fibre neutre (328) du rail (320), dans lequel un point de fixation (332) de l'unité de capteur à fibres optiques (303 ; 330 ; 330a) est disposé sur un côté de la fibre neutre (328) et un autre point de fixation (334) est disposé sur le côté opposé de la fibre neutre (328).

**303**

204
304        306
205                    206   305
308

# Fig. 1

Fig. 2

Fig. 3

Fig. 4

**EP 3 097 397 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101797928 A
- DE 69521971 T1